# EUROPÄISCHE PATENTANMELDUNG

(11) **EP 2 301 741 A1**
(43) Veröffentlichungstag der Anmeldung: **30.03.2011**
(21) Anmeldenummer: 10172787.3
(22) Anmeldetag: 13.08.2010
(51) Int. Cl.: B29C 67/00, B29C 70/68, H04R 25/00

(54) **Im Ohr tragbare Gehäuseschale oder Otoplastik**

(30) Priorität: 28.09.2009 DE 102009043235
(71) Anmelder: Siemens Medical Instruments Pte. Ltd., Singapore 139959 (SG)
(72) Erfinder: Schmidt, Benjamin, 90419 Nürnberg (DE); Singer, Erwin, 90542 Eckental (DE)
(74) Vertreter: Maier, Daniel Oliver

(57) **Zusammenfassung**

Die Herstellung einer im Ohr tragbaren Gehäuseschale (1) oder Otoplastik (11) eines Hörgerätes soll vereinfacht und verbessert werden. Hierzu wird vorgeschlagen, ein vorgefertigtes Bauteil, insbesondere einen Rahmen (2) zur Aufnahme eines Elektronikmoduls oder einen Receiveradapter (12) in einem Rapid-Prototyping-Gerät zu positionieren und durch die anschließende Herstellung der Gehäuseschale (1) oder Otoplastik (11) in die Gehäuseschale (1) oder Otoplastik (11) zu integrieren. Eine Verbindung des Bauteils mit der Gehäuseschale (1) oder Otoplastik (11) in einem weiteren Verfahrensschritt nach der Herstellung der Gehäuseschale (1) oder Otoplastik (11) wird dadurch vermieden.

## Beschreibung

Die vorliegende Erfindung betrifft ein Verfahren zur Herstellung einer im Ohr tragbaren Gehäuseschale oder Otoplastik mittels eines Rapid-Prototyping-Verfahrens.

Moderne Herstellungsverfahren für Gehäuseschalen oder Ohrpassstücke (Otoplastiken) von Hörgeräten nutzen CAD-Design-Software und Rapid-Prototyping-Technologien. Ein derartiges Verfahren, mit dem die Gehäuseschalen oder Otoplastiken an die Konturen eines Ohrkanals angepasst werden können, ist aus der europäischen Patentschrift EP 0 516 808 B1 bekannt. Demnach können die äußeren Konturen eines Ohrabdrucks beispielsweise mit Hilfe von Laserinterferometrie oder einer Videokamera erfasst werden. Daneben besteht auch die Möglichkeit, die Konturen des Ohrkanals durch berührungsloses Abtasten, z. B. durch Ultraschall, zu gewinnen. Die gewonnenen Daten werden digitalisiert und mittels aus der CAD-CAM-Technik bekannter Algorithmen in eine dreidimensionale Computerdarstellung der äußeren Konturen der Gehäuseschale oder der Otoplastik umgesetzt. Dabei wird das dreidimensionale Computermodell in eine Folge von Querschnitten umgewandelt. Die Gehäuseschale bzw. Otoplastik wird dann dadurch hergestellt, dass die einzelnen Querschnittsebenen nacheinander und übereinander, untereinander oder nebeneinander ausgebildet und miteinander verbunden werden. Für diesen Arbeitsschritt kann beispielsweise ein stereolithografisches oder ähnliches Verfahren verwendet werden.

Ein stereolithografisches Verfahren (SLA-Verfahren) kann beispielsweise so ausgeführt werden, dass auf einer computergesteuerten, bewegbaren Plattform ein Behälter mit aktiviertem, flüssigem Kunstharz angeordnet ist. Durch gezielten Einsatz einer auf die Oberfläche des flüssigen Kunstharzes gerichteten, eine Teilpolymerisation des Kunstharzes bewirkenden Strahlung kann eine erste Querschnittsfläche der Otoplastik erzeugt werden. Anschließend ist es erforderlich, jeweils nach Fertigstellen einer Querschnittsfläche, die Plattform um die Dicke einer Schicht abzusenken, damit die nächste Querschnittsebene auf der Oberfläche des flüssigen Kunstharzes in der gleichen Weise erzeugt werden kann. Dies wird solange fortgesetzt, bis schließlich die mindestens teilweise polymerisierte Plastik dem Behälter entnommen werden kann.

Neben dem SLA-Verfahren gibt es eine Reihe weiterer Rapid-Prototyping-Verfahren, die zur Herstellung von Hörgeräte- Gehäuseschalen oder Otoplastiken geeignet sind. Beispielsweise seinen hierfür noch das selektive Lasersintern (SLS-Verfahren), das Direct Light Processing (DLP) oder das 3D-Printing genannt.

Für derartige Herstellungsverfahren sind nur einige wenige Kunststoffe geeignet. Die Materialeigenschaften dieser Kunststoffe entsprechen vielfach nicht allen Anforderungen, die an Hörgeräteschalen oder Otoplastiken gestellt werden. So sind die für das stereolithografische Herstellungsverfahren geeigneten Kunststoffe in aller Regel sehr hart und teilweise auch spröde, weshalb die direkte Befestigung von Hörgeräte-Bauteilen an der Gehäuseschale oder Otoplastik häufig nicht möglich ist.

Im Ohr tragbare, semimodulare Hörgeräte umfassen in der Regel eine Gehäuseschale und ein Elektronikmodul. Aufgrund der oben genannten Materialeigenschaften sowie Bauteiltoleranzen bei der Schalenfertigung ist es derzeit nicht möglich, dass die mit einem Rapid-Prototyping-Verfahren gefertigte Gehäuseschale die Funktion des Modulträgers für das Elektronikmodul übernimmt. Bei heutigen Herstellungsverfahren wird daher ein zusätzlicher Modulträger, zumeist als Kunststoff-Spritzgussteil, hergestellt und in einem zusätzlichen Arbeitsschritt mit der Gehäuseschale verklebt.

Ähnlich verhält es sich bei den in den Gehäuseschalen oder Otoplastiken angeordneten Receivern. Auch diese können aus den genannten Gründen nicht direkt mit den betreffenden Gehäuseschalen oder Otoplastiken verbunden werden, sondern nur in Verbindung mit einem Receiveradapter. Auch dabei handelt es sich in der Regel um ein separat hergestelltes Kunststoff-Spritzgussteil, das bisher in einem zusätzlichen Arbeitsschritt in die betreffenden Gehäuseschale oder Otoplastik eingeklebt wird.

Aus der Druckschrift US 2009/0074221 A1 ist ein hinter dem Ohr tragbares Hörgerät mit einem individuell geformten Gehäuse bekannt. Das Gehäuse kann aus zwei Teilen bestehen, die gemeinsam in einem Rapid-Prototyping-Prozess gefertigt werden.

Aufgabe der vorliegenden Erfindung ist es, die Herstellung einer im Ohr tragbaren Gehäuseschale oder Otoplastik zu vereinfachen und zu verbessern.

Diese Aufgabe wird durch ein Verfahren mit den Verfahrensschritten gemäß Patentanspruch 1 gelöst.

Bei dem erfindungsgemäßen Verfahren zur Herstellung einer im Ohr tragbaren Gehäuseschale oder Otoplastik werden zunächst CAD-Daten einer dreidimensionalen Form der Gehäuseschale oder Otoplastik bereitgestellt. Ebenso werden auch CAD-Daten einer dreidimensionalen Form eines vorgefertigten, mit der Gehäuseschale oder der Otoplastik zu verbindenden Bauteils, insbesondere eins Rahmens zur Aufnahme und Befestigung eines Elektronikmoduls oder eines Receiveradapters zur Verbindung mit einem Receiver, bereitgestellt. Anschließend erfolgt eine virtuelle Positionierung des Bauteils und der Gehäuseschale oder Otoplastik zueinander, insbesondere mit dem Ziel, kleinstmögliche Hörgeräte zu bauen.

Nachdem die Gehäuseschale oder Otoplastik mit dem damit verbundenen Bauteil im Computermodell vorliegt, erfolgt die eigentliche Herstellung. Hierzu wird zunächst das bereits vorgefertigte Bauteil in dem Rapid-Prototyping-Gerät zur Durchführung des Rapid-Prototyping-Verfahrens in geeigneter Weise bereitgestellt. Dabei ist insbesondere auf eine exakte Positionierung und Ausrichtung des Bauteils in dem Rapid-Prototyping-Gerät zu achten, damit sich das Bauteil später auch tatsächlich in der vorgesehenen Position und Ausrichtung in der Gehäuseschale oder Otoplastik befindet. Anschließend wird die Gehäuseschale oder Otoplastik durch das Rapid-Prototyping-Verfahren, sozusagen um das Bauteil herum, unter wenigstens teilweisem Einschluss des Bauteils aufgebaut. Das Bauteil ist somit in die Gehäuseschale oder Otoplastik integriert.

Die Erfindung bietet den Vorteil, dass das Einkleben des Bauteils in die Gehäuseschale oder Otoplastik entfällt und sich somit der Herstellungsprozess vereinfacht.

Dient das erfindungsgemäß eingebrachte Bauteil zur Aufnahme eines weiteren Bauteils, z.B. eines Elektronikmoduls oder Receivers, so hat dies gegenüber einer direkten Verbindung des weiteren Bauteils mit der Gehäuseschale oder Otoplastik den Vorteil, dass dadurch eine sehr genaue Passung zwischen dem Bauteil und dem weiteren Bauteil möglich ist. Weiterhin wird die Gehäuseschale oder Otoplastik weniger stark belastet, als dies bei einer direkten Verbindung (z.B. Rast- oder Schnappverbindung) mit dem weiteren Bauteil der Fall wäre. Darüber hinaus lassen sich durch die Erfindung kleinere Bauformen realisieren, als dies durch den herkömmlichen Herstellungsprozess möglich wäre.

Selbstverständlich lassen sich mit dem Herstellungsverfahren gemäß der Erfindung auch mehrere Bauteile gleichzeitig in eine Gehäuseschale oder Otoplastik einbringen. Darüber hinaus können auch bei dem Herstellungsverfahren gemäß der Erfindung in einem Rapid-Prototyping-Gerät viele Gehäuseschalen und/oder Otoplastiken gleichzeitig hergestellt werden, wie dies bei der Schalenfertigung üblich ist.

Zur exakten Positionierung des Bauteils bzw. einer Vielzahl an Bauteilen wird jedes auf einem Träger befestigt, derart, dass bei dem im Rapid-Prototyping-Gerät befindlichen Träger die exakte Position und Ausrichtung eines jeden betreffenden Bauteils bekannt ist. Vorteilhaft ist hierzu der Träger mit geeigneten Positionierungshilfen und/oder vom Rapid-Prototyping-Gerät erfassbareren Markierungen zum automatischen Erkennen der Positionierung des Trägers und der Bauteile ausgestattet. Nur durch eine exakte Bestimmung der Position eines Bauteils im Rapid-Prototyping-Gerät ist auch eine exakte Positionierung des Bauteils in der Gehäuseschale oder Otoplastik möglich.

Zur Verbindung des vorgefertigten Bauteils mit der Gehäuseschale oder Otoplastik während der Herstellung sind mehrere Möglichkeiten gegeben:

Bei einer Variante wird in einem Verfahrensschritt zunächst eine Verbindungsschicht zur Verbindung des Bauteils mit der Gehäuseschale oder der Otoplastik auf das Bauteil aufgetragen, bevor die Herstellung der Gehäuseschale oder Otoplastik erfolgt. Die Verbindungsschicht ist beispielsweise als Klebschicht oder Lack ausgeführt und bewirkt, dass das Bauteil an der fertigen Gehäuseschale oder Otoplastik haftet.

Daneben ist auch eine formschlüssige Verbindung zwischen der Gehäuseschale oder Otoplastik und dem Bauteil möglich. Hierzu umfasst das Bauteil Anformungen oder Aussparungen, die in Verbindung mit entsprechend negativ ausgebildeten Anformungen oder Aussparungen in der Gehäuseschale oder Otoplastik zu einer formschlüssigen, nicht lösbaren Verbindung zwischen der Gehäuseschale oder Otoplastik und dem Bauteil führen.

Bei einer Ausführungsform der Erfindung ist die Anformung und/oder das Bauteil selbst zumindest teilweise aus einem transparenten Material hergestellt, so dass es bei der Herstellung der Gehäuseschale oder Otoplastik in diesem Bereich durchleuchtet werden kann. Dies ist insbesondere bei der Verwendung eines fest positionierten Lasers von Vorteil, da damit auch in einem sonst für den Laser durch das Bauteil abgeschatteten Bereich der Schalenaufbau erfolgen kann.

Die Erfindung wird nachfolgend anhand von Ausführungsbeispielen näher erläutert. Es zeigen:
Fig. 1 den Beginn der Herstellung einer Gehäuseschale eines im Ohr tragbaren Hörgerätes mit einem Rahmen zur Aufnahme eines Elektronikmoduls,
Fig. 2 die Herstellung der Gehäuseschale zu einem im Herstellungsprozess weiter fortgeschrittenen Zeitpunkt,
Fig. 3 eine Otoplastik mit einem integrierten Receiveradapter und
Fig. 4 ein Flussdiagramm eines Herstellungsverfahrens gemäß der Erfindung.

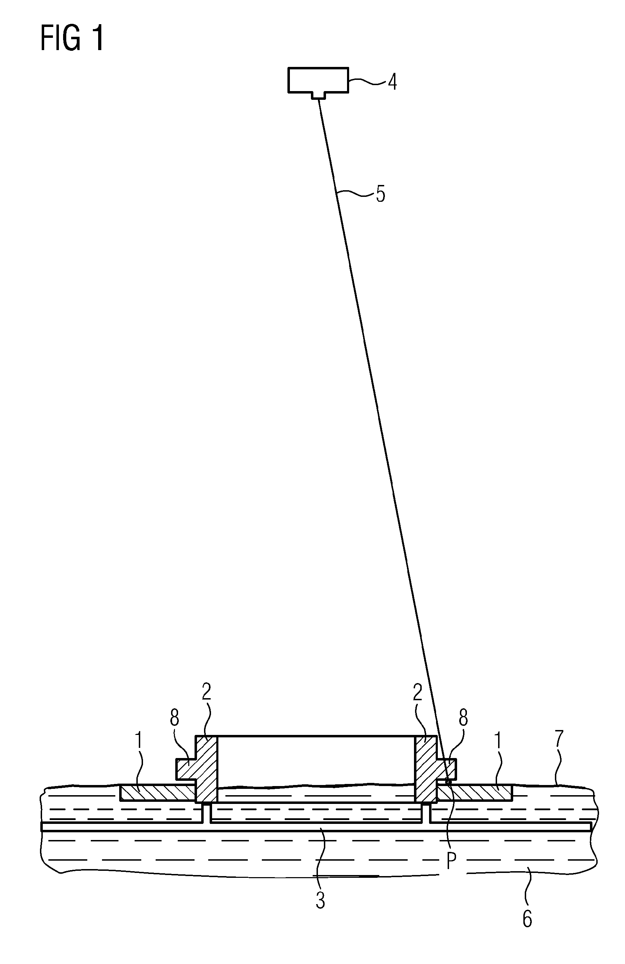

Figur 1 zeigt in stark vereinfachter, schematischer Darstellung den Beginn der Herstellung einer Gehäuseschale 1 eines in dem Ohr tragbaren Hörgerätes. Dabei befindet sich in einem Behälter eines Rapid-Prototyping-Gerätes ein Träger 3 mit einem vorgefertigten Rahmen 2, der eine Anformung 8 aufweist und in den ein Elektronikmodul (nicht dargestellt) eingesetzt werden kann. Weiterhin befindet sich in dem Behälter eine durch Bestrahlung durch Laserlicht aushärtbare Flüssigkeit 6. Von einem Laser 4 geht ein steuerbarer Laserstrahl 5 aus und trifft im Punkt P auf die Oberfläche 7 der Flüssigkeit 6, wodurch diese im Punkt P aushärtet. Der Rahmen 2 und dessen Anformung 8 sind aus transparentem Material gefertigt, so dass sie der Laserstrahl 5 nahezu ungehindert durchdringen kann. Damit ist auch ein Aufbau der Gehäuseschale 1 unterhalb der Anformung 8 möglich. Durch eine stufenweise Anhebung des Flüssigkeitsstandes bzw. Absenkung bereits erzeugter Schalen-Bereiche in der Flüssigkeit erfolgt ein schichtweiser Schalenaufbau. Auf diese Weise ist bereits der aus Figur 1 ersichtliche Teil der Gehäuseschale 1 entstanden.

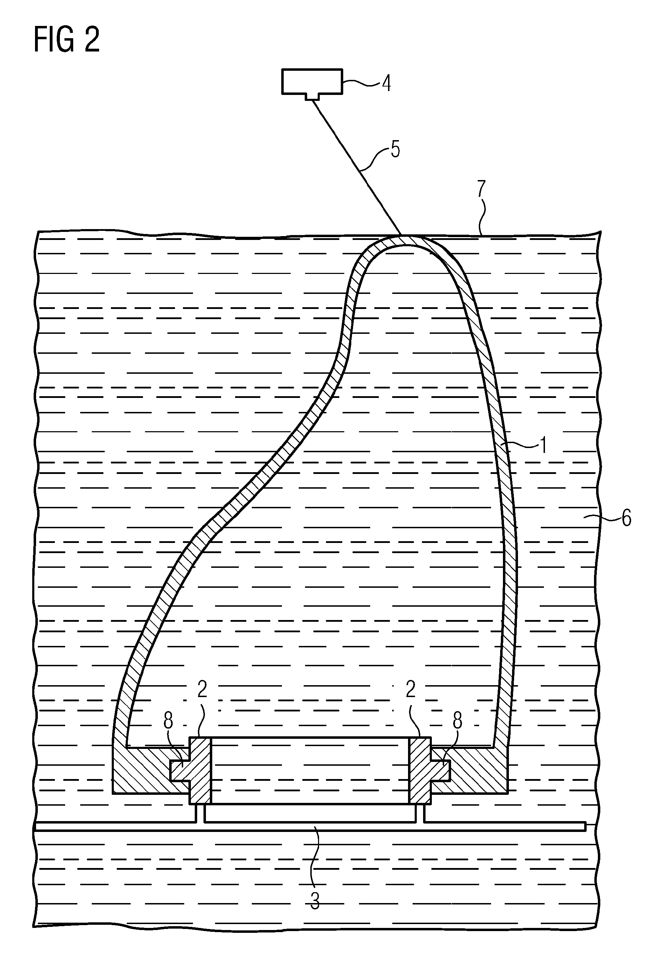

Figur 2 zeigt die nach diesem Prinzip erfolgende Herstellung der Gehäuseschale 1 zu einem im Herstellungsprozess weit fortgeschrittenen Zeitpunkt. Wie der Figur 2 zu entnehmen ist, ist der Rahmen 2 durch diesen Herstellungsprozess fest und unlösbar in die Gehäuseschale 1 integriert. Zur Verbesserung der Verbindung zwischen der Gehäuseschale 1 und dem Rahmenteil 2 kann dieses und insbesondere dessen Anformung 8 mit einem Lack oder Klebstoff beschichtet sein, der auch an dem Schalenmaterial haftet. Dadurch entsteht neben der formschlüssigen Verbindung zusätzlich auch eine stoffschlüssige Verbindung zwischen der Gehäuseschale 1 und dem Rahmen 2.

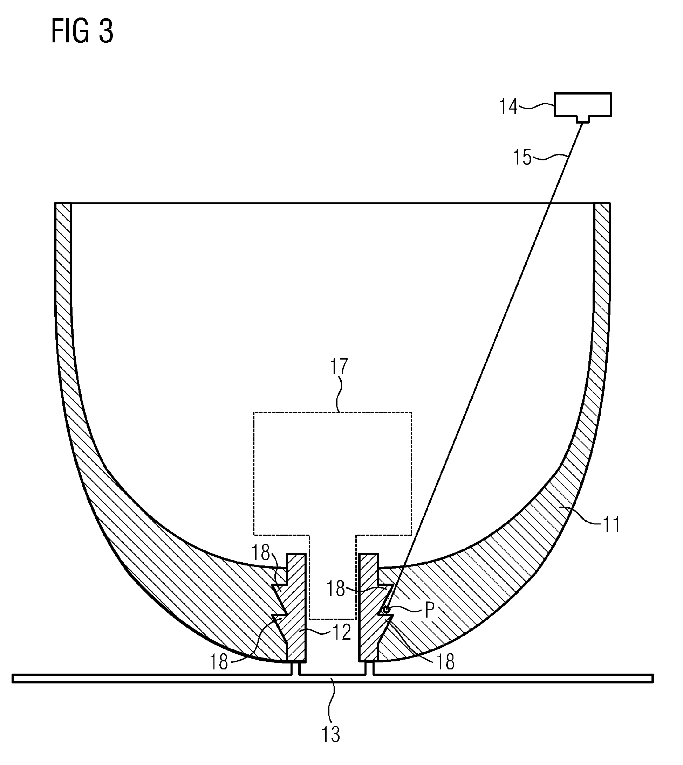

Ein weiteres Beispiel eines erfindungsgemäßen Herstellungsverfahrens ist aus Figur 3 ersichtlich. Diese zeigt eine im Ohr tragbare Otoplastik 11 eines hinter dem Ohr tragbaren Hörgerätes (nicht dargestellt). Zur Verbindung der Otoplastik 11 mit einem Receiver 17 ist in die Otoplastik 11 ein Receiveradapter 12 integriert. Die Herstellung erfolgt dabei weitgehend analog zu dem Ausführungsbeispiel gemäß den Figuren 1 und 2. Der Einfachheit halber wurde hier jedoch auf eine zweite Figur verzichtet und die Lage des Aushärtpunktes P in die bereits fertige Otoplastik eingezeichnet, ohne dass dies dem Verständnis abträglich wäre. Ebenso wie im vorherigen Ausführungsbeispiel wird auch hier zunächst ein Bauteil, nämlich der Receiveradapter 12, auf einen Träger 13 montiert und exakt in einem Rapid-Prototyping-Gerät positioniert. Anschließend erfolgt eine computergesteuerte Bestrahlung einer aushärtbaren Flüssigkeit durch den Laser 14 durch den die Flüssigkeit in dem Punkt, in dem der Laserstrahl 15 die Oberfläche der Flüssigkeit trifft, aushärtet. Die Aushärtung der Flüssigkeit im Punkt P erfolgt also auch hier zu einem Zeitpunkt, zu dem oberhalb des Punktes P liegende Schichten der Otoplastik 11 noch nicht ausgebildet sind.

Anders als in dem vorausgehenden Ausführungsbeispiel ist hier jedoch der Receiveradapter 12 nicht aus einem transparenten Material gefertigt und daher lichtundurchlässig für den Laserstrahl 15. Es ist jedoch durch die spezielle Formgebung der Anformungen 18 in Verbindung mit einer entsprechenden Positionierbarkeit des Lasers 14 - wie gezeigt ist - dennoch möglich, eine nicht lösbare, formschlüssige Verbindung zwischen der Otoplastik 11 und dem Receiveradapter 12 zu schaffen.

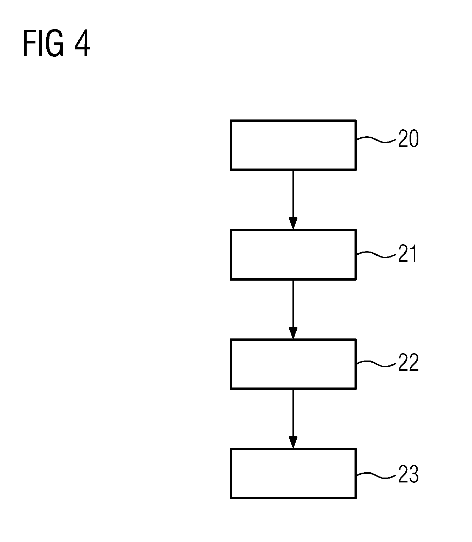

In Figur 4 werden zur weiteren Verdeutlichung die wesentlichen Verfahrensschritte der Erfindung aufgezeigt.

Zunächst werden bei dem erfindungsgemäßen Verfahren zur Herstellung einer im Ohr tragbaren Gehäuseschale oder Otoplastik mittels eines Rapid-Prototyping-Verfahrens in einem ersten Verfahrensschritt 20 CAD-Daten einer dreidimensionalen Form der Gehäuseschale oder Otoplastik bereitgestellt. Ebenso werden in einem weiteren Verfahrensschritt 21 CAD-Daten einer dreidimensionalen Form eines vorgefertigten, mit der Gehäuseschale oder der Otoplastik zu verbindenden Bauteils bereitgestellt. Anschließend erfolgt in einem Verfahrensschritt 22 eine computergestützte, virtuelle Positionierung des Bauteils und der Gehäuseschale oder Otoplastik zueinander. Nachdem nun die Gehäuseschale oder Otoplastik mit integriertem Bauteil als 3D-Datensatz bzw. Computermodell existiert, erfolgt nun der eigentliche Herstellungsprozess. Dabei wird zunächst in einem Verfahrenschritt 23 das Bauteil in einem Rapid-Prototyping-Gerät zur Durchführung des Rapid-Prototyping-Verfahrens bereitgestellt, derart, dass die genaue Position und Ausrichtung des Bauteils in einer Steuereinrichtung des Rapid-Prototyping-Gerätes vorliegen. Anschließend erfolgt in einem Verfahrensschritt 24 der Aufbau der Gehäuseschale oder Otoplastik durch das Rapid-Prototyping-Verfahren unter wenigstens teilweisem Einschluss des Bauteils.

## Patentansprüche

1. Verfahren zur Herstellung einer im Ohr tragbaren Gehäuseschale (1) oder Otoplastik (11) mittels eines Rapid-Prototyping-Verfahrens durch
- Bereitstellen von CAD-Daten einer dreidimensionalen Form der Gehäuseschale (1) oder Otoplastik (11),
- Bereitstellen von CAD-Daten einer dreidimensionalen Form eines vorgefertigten, mit der Gehäuseschale (1) oder der Otoplastik (11) zu verbindenden Bauteils,
- virtuelle Positionierung des Bauteils und der Gehäuseschale (1) oder Otoplastik (11) zueinander,
- Bereitstellen des Bauteils in einem Rapid-Prototyping-Gerät zur Durchführung des Rapid-Prototyping-Verfahrens,
- Aufbau der Gehäuseschale (1) oder Otoplastik (11) durch das Rapid-Prototyping-Verfahren unter wenigstens teilweisem Einschluss des Bauteils.

2. Verfahren nach Anspruch 1, wobei das Bauteil zum Bereitstellen auf einen Träger (3; 13) montiert wird.

3. Verfahren nach Anspruch 1 oder 2, wobei auf das Bauteil eine Verbindungsschicht zur Verbindung des Bauteils mit der Gehäuseschale (1) oder der Otoplastik (11) aufgetragen wird.

4. Verfahren nach Anspruch 3, wobei die Verbindungsschicht ein Klebstoff oder Lack ist.

5. Verfahren nach einem der Ansprüche 1 bis 4, wobei das Bauteil wenigstens eine Anformung (8; 18) zum Erzeugen einer formschlüssigen Verbindung aufweist.

6. Verfahren nach einem der Ansprüche 1 bis 5, wobei die Anformung (8) und/oder das Bauteil zumindest teilweise aus einem transparenten Material hergestellt sind.

7. Verfahren nach einem der Ansprüche 1 bis 6, wobei das Bauteil ein Rahmen (2) zur Befestigung eines Elektronikmoduls ist.

8. Verfahren nach einem der Ansprüche 1 bis 7, wobei das Bauteil ein Receiveradapter (12) zur Verbindung mit einem Receiver ist.
